# FASCICULE DE BREVET EUROPEEN

(11) **EP 3 263 228 B1**
(45) Date de publication et mention de la délivrance du brevet: **06.03.2019**
(21) Numéro de dépôt: 17178481.2
(22) Date de dépôt: 28.06.2017
(51) Int. Cl.: B05B 15/555, B05B 15/52, B05B 14/41, B08B 1/00, B08B 1/04, B08B 3/02, B08B 5/02, B08B 9/00, B25J 11/00, B05B 13/04, B05B 16/40, B08B 9/093

(54) **SYSTEME DE NETTOYAGE MUNI D'UN POSTE DE SECHAGE**
REINIGUNGSSYSTEM MIT EINER TROCKNUNGSSTATION
CLEANING SYSTEM COMPRISING A DRYING STATION

(30) Priorité: 28.06.2016 FR 1656024
(43) Date de publication de la demande: 03.01.2018
(73) Titulaire: Exel Industries, 51200 Epernay (FR)
(72) Inventeur: PRUS, Eric, 75009 PARIS (FR); MEDARD, Cyrille, 75009 PARIS (FR); PROVENAZ, Philippe, 75009 PARIS (FR)
(74) Mandataire: Lavoix

(56) Documents cités:
- WO-A1-02/078858
- WO-A1-2009/046952
- WO-A1-2017/033074
- DE-A1- 4 129 778
- DE-A1-102012 014 212
- DE-A1-102012 018 940
- JP-B2- 3 050 034

## Description

La présente invention concerne un procédé de nettoyage automatique, effectué pendant des séquences de nettoyage durant lesquelles tout ou partie d'au moins un élément à nettoyer, telle qu'un robot pulvérisateur, est nettoyée. Chaque élément à nettoyer est disposé à l'intérieur d'une cabine à atmosphère contrôlée appartenant à une installation de revêtement, telle qu'une installation de peinture automobile. De manière connue, une cabine de peinture comprend un convoyeur pour déplacer des pièces à peindre, telles que des carrosseries de véhicule automobile, et un ou plusieurs robots pulvérisateurs de type multiaxes, qui sont disposés sur le côté du convoyeur. Le ou les robots pulvérisateurs sont supportés par un caillebotis ou suspendus à une structure verticale.

Généralement, l'air d'une cabine de peinture est régulé en température et en hygrométrie pour assurer une bonne application de la peinture sur la surface à peindre. Cette double régulation nécessite un traitement de l'air extérieur faisant intervenir des étapes successives de refroidissement et de chauffage de l'air pour amener l'air à une certaine température et à un certain taux d'humidité. Ce traitement d'air engendre une forte consommation d'énergie et des rejets de CO₂ dans l'atmosphère.

Pour remédier à cet inconvénient et respecter ainsi les normes environnementales appliquées aux usines de fabrication automobile, il est connu de recycler l'air de la cabine. En pratique, une ventilation d'une cabine moderne fonctionne avec 90 à 100% d'air recyclé.

Le taux moyen de transfert d'application du produit de revêtement est compris entre 70% et 80% : une partie de la peinture projetée n'est donc pas déposée sur la surface à peindre. Cette peinture perdue est couramment qualifiée « d'overspray » dans le domaine du revêtement.

Une partie de l'overspray peut être récupéré dans un système de filtration disposé, en partie inférieure de la cabine, sous le caillebotis. Pour cela, un système de ventilation est utilisé pour générer un courant d'air vertical dirigé de haut en bas, lequel permet de guider les gouttes de peinture vers le système de filtration. Typiquement, le système de filtration comprend un laveur ayant une réserve d'eau dans le cas d'un laveur traditionnel ou une réserve de poudre dans le cas d'un laveur sec. Cette réserve d'eau ou de poudre est destinée à absorber les gouttes de peinture issues de l'overspray. Le système de filtration permet donc de séparer l'air et les gouttes de peinture et de réutiliser l'air pour la ventilation.

L'autre partie de l'overspray est déposée sur les équipements implantés en cabine, tels que les pulvérisateurs et les robots et éventuellement sur les parois de la cabine elle-même. Les gouttes de peinture déposées sur les équipements risquent alors de s'accumuler et, à terme, de tomber sur la surface à peindre. Des défauts de finition peuvent alors apparaitre sur les carrosseries. De tels défauts imposent une retouche partielle ou totale de la surface revêtue.

Ainsi, les équipements de la cabine doivent être nettoyés périodiquement. En pratique, des arrêts de production sont ménagés à cet effet avec une fréquence allant de 2 à 4 heures pour le revêtement des parties intérieures de la carrosserie et avec une fréquence allant de 4 à 8 heures pour le revêtement des parties extérieures. Pendant les arrêts de production, des opérateurs pénètrent à l'intérieur de la cabine avec des chiffons imbibés de solvant et nettoient manuellement les équipements de la cabine. Toutefois, ces opérations sont couteuses en personnel. En outre, dans le cas où l'air de la cabine est recyclé, celui-ci demeure néanmoins pollué par des composés organiques volatils (COV), comme des vapeurs de solvants, lesquelles sont nuisibles pour la santé. Les opérateurs doivent donc se protéger avec des équipements spécifiques qui sont encombrants et qui gênent leur mobilité.

Pour pallier ces inconvénients, certaines cabines comprennent un système de nettoyage automatique, comprenant une boîte de rinçage. Ce système de nettoyage automatique fonctionne à chaque changement de véhicule dans la zone de travail du robot et/ou à chaque changement de teinte. Les robots multiaxes portant les pulvérisateurs sont alors déplacés à l'intérieur de la boîte de rinçage installée en bord de cabine et sont nettoyés par application d'un solvant liquide. Les robots sont ensuite séchés par un ou plusieurs jets d'air. La boite de rinçage fait donc également office de boite de séchage. Cela limite la place occupée à l'intérieur de la cabine mais ne permet pas de sécher efficacement le solvant appliqué sur les surfaces du pulvérisateur.

Dans la pratique, le temps de changement de teinte et le temps de changement de véhicule dans la zone d'application du produit de revêtement, qui dépendent de la cadence de production, sont très courts, si bien que le temps alloué au nettoyage est également très court, de l'ordre de 10 secondes, ce qui n'autorise pas un nettoyage approfondi des surfaces extérieures des équipements de peinture. En effet, une part importante de cette période est dédiée au séchage, afin d'éviter de polluer les surfaces de la carrosserie avec du solvant. Ainsi, les systèmes de nettoyage actuels ne sont conçus que pour nettoyer l'extrémité de la tête du pulvérisateur. Ceci est par exemple le cas des systèmes décrits dans WO-A-97/18903 et WO-A-2015/169432.

Ainsi, les autres parties du pulvérisateur, telles que le capot ou le corps sur lequel est fixée la jupe, ne sont pas nettoyées. En outre, certaines parties du robot lui-même, comme le poignet, ne sont pas nettoyées. Ces parties non nettoyées restent donc entachées de produit de revêtement, lequel est susceptible de goutter sur la surface à peindre pendant l'application du produit et de créer ainsi des défauts de finition.

Certaines boîtes de rinçage ont des buses qui sont mobiles le long d'un axe, ce qui permet de rincer une surface plus importante et de réduire le nombre d'injecteurs.

Par ailleurs, d'autres solutions ont été mises en oeuvre pour augmenter le temps alloué au nettoyage. Une solution consiste à positionner la boîte de rinçage au plus près de la position du robot en fin d'application du produit. Une autre solution consiste à utiliser un jeu de deux pulvérisateurs. Pendant que le premier pulvérisateur travaille, l'autre pulvérisateur est nettoyé. On dispose alors d'une période plus longue dédiée au nettoyage, de l'ordre de 40 à 50 secondes. Lors du changement de véhicule, le pulvérisateur « sale » est alors remplacé par le pulvérisateur « propre » en attente. Dans le même esprit, seul le capot du pulvérisateur peut être remplacé lors du changement de véhicule.

Toutefois, ces solutions ne sont pas satisfaisantes car elles ne permettent pas d'obtenir une qualité de nettoyage optimale des équipements de peinture salis pendant l'application du revêtement. En effet, les pièces constitutives des pulvérisateurs sont des pièces de géométrie complexe ayant de nombreux recoins, ce qui les rend difficiles à nettoyer. En outre, tous ces recoins forment des zones de rétention potentielle de solvant liquide, qui nécessitent d'être séchées pendant longtemps car elles sont susceptibles de laisser échapper des restes de solvant accumulé. Or, le temps alloué au nettoyage est trop court pour garantir un séchage parfait des surfaces rincées.

A cet effet, l'invention concerne un système de nettoyage automatique selon la revendication 1.

Des aspects avantageux mais non obligatoires du système sont définis aux revendications 2 à 6.

L'invention et d'autres avantages de celle-ci apparaîtront plus clairement à la lumière de la description qui va suivre de deux modes de réalisation d'un système de nettoyage conforme à son principe, donnée uniquement à titre d'exemple et faite en référence aux dessins annexés dans lesquels :
- la figure 1 est une vue en perspective de l'intérieur d'une cabine de peinture montrant deux robots pulvérisateurs et un système de nettoyage conforme à l'invention, les deux robots étant représentés dans une première configuration pendant une séquence de nettoyage,
- la figure 2 est une vue analogue à la figure 1, dans laquelle les deux robots pulvérisateurs sont représentés dans une deuxième configuration pendant la séquence de nettoyage,
- la figure 3 est une vue en perspective d'un poste de rinçage appartenant à la station de nettoyage des figures 1 et 2, ce poste de rinçage est représenté sans sa paroi périphérique pour faciliter la visualisation des composants internes au poste de rinçage, comme représenté dans la zone encerclée III à la figure 1, et
- la figure 4 est une vue en perspective d'un système de nettoyage ne faisant pas partie de l'invention, ce système utilisant deux robots pulvérisateurs distincts, qui sont aptes à se nettoyer mutuellement l'un l'autre.

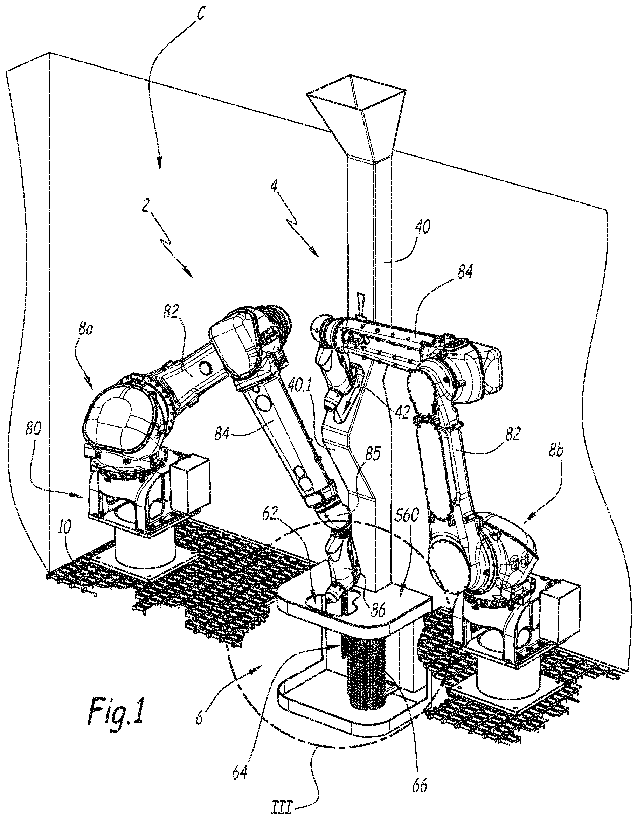

Sur les figures 1 à 3 est représenté un premier mode de réalisation d'un système 2 pour nettoyer automatiquement un robot pulvérisateur de peinture à l'intérieur d'une cabine C à atmosphère contrôlée, cette cabine étant représentée uniquement à la figure 1 par une partie de ses cloisons.

Dans l'exemple, le système de nettoyage 2 est commun à plusieurs robots pulvérisateurs, notamment à deux robots pulvérisateurs, respectivement 8a et 8b. Les robots pulvérisateurs 8a et 8b et la cabine appartiennent à une installation de revêtement. Les robots pulvérisateurs 8a et 8b sont des robots multiaxes qui sont montés sur un caillebotis 10 et qui sont destinés à appliquer un produit de revêtement sur une surface à peindre, telle qu'une carrosserie automobile déplacée le long d'un convoyeur non représenté. Les robots 8a et 8b comprennent chacun une base 80 fixée au caillebotis 10, un premier bras 82 articulé sur la base 80 et un second bras 84 articulé avec le premier bras 82. Le bras 84 comporte à son extrémité libre un poignet 85 sur lequel est fixé un pulvérisateur 86.

Le pulvérisateur 86 comprend un corps 86.1 et une jupe 86.2 de guidage d'air. Dans l'exemple, le pulvérisateur 86 comprend également un bol rotatif 86.3 disposé à l'intérieur de la jupe 86.2. Le produit de revêtement est éjecté entre la jupe et le bol.

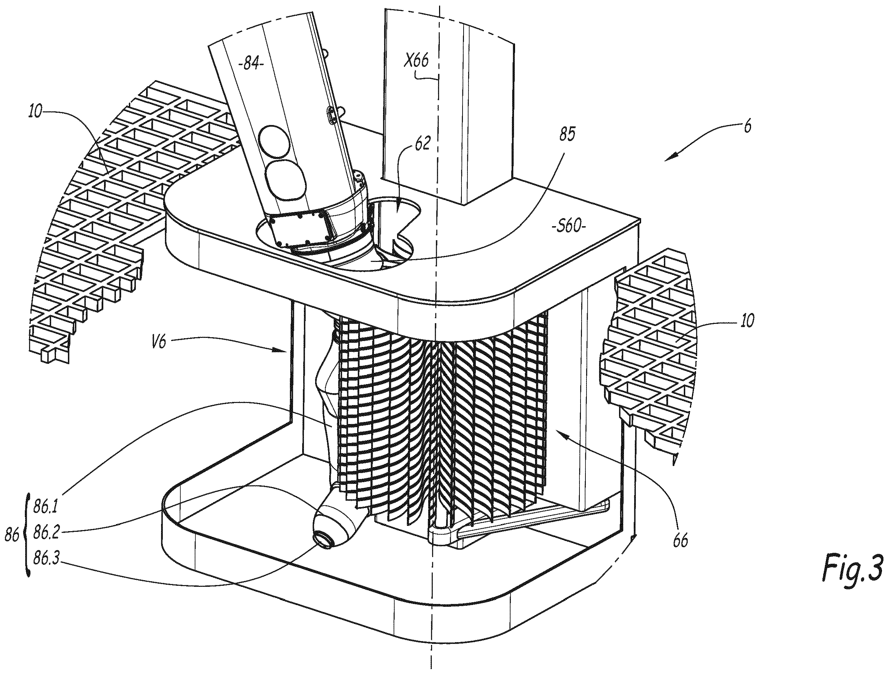

Comme visible aux figures 1 et 3, le système 2 comprend un poste de rinçage 6 qui est fixe à l'intérieur de la cabine. Avantageusement, le poste de rinçage 6 comprend une enceinte fermée 60 délimitant une ouverture 62 pour le passage du pulvérisateur 86. Le fait que le poste de rinçage comprenne une enceinte fermée permet d'éviter les éclaboussures à l'intérieur de la cabine C. Celle-ci peut alors être équipée d'un laveur sec ne tolérant pas de rejets liquides.

Dans l'exemple l'ouverture 62 est délimitée sur une surface supérieure S60 de l'enceinte fermée 60. Le poste de rinçage 6 est équipé d'une buse 64 de projection d'un solvant liquide. Avantageusement, le poste de rinçage 6 comprend plusieurs buses 64 alignées selon une direction verticale. L'avantage d'utiliser une enceinte fermée est qu'il est possible de récupérer le solvant liquide

Dans l'exemple, le solvant liquide est un solvant chimique. Cependant, à titre de variante, de l'eau, éventuellement avec des additifs, peut être utilisée comme solvant liquide.

Avantageusement, les buses 64 pulvérisent un mélange air-solvant, ce qui permet d'économiser la quantité de solvant utilisée pour le rinçage.

La vitesse du jet produit par chaque buse 64 est paramétrable. Elle est en pratique ajustée en fonction de la géométrie de la pièce à rincer. La vitesse du jet est d'autant plus importante pour une surface difficile à nettoyer, comme un recoin. Dans l'exemple, la vitesse d'impact de chaque jet peut atteindre 20 m/s. Ainsi, les gouttelettes de solvant disposent d'une forte énergie cinétique favorisant le décollement des tâches de peinture présentes sur les surfaces du pulvérisateur. En d'autres termes, on combine l'effet chimique du solvant à un effet mécanique lié à la puissance des jets. On parle de « spray » à haute efficacité mécanique. Ce type de « spray » présente l'avantage que des solvants moins toxiques et, par ailleurs, moins couteux, peuvent être utilisés.

Dans l'exemple, les buses 64 sont fixes. Toutefois, à titre de variante non représentée, elles peuvent être déplaçables en translation, par exemple dans le sens vertical.

Comme visible à la figure 3, le poste de rinçage 6 est également équipé d'un rouleau de nettoyage 66. Ce rouleau de nettoyage 66 est un rouleau à brosses souples qui est destiné à pivoter autour d'un axe vertical X66 lors du nettoyage du pulvérisateur. Le rouleau 66 permet de décrocher les éventuels résidus de peinture qui n'ont pas été dissous par le spray.

A titre de variante non représentée, le poste de rinçage 6 est agencé de telle sorte que les brosses du rouleau 66, alors souillées de peinture, peuvent être rincées par les buses 64.

Le poste de rinçage 6 délimite un volume V6 dimensionné pour recevoir la totalité du pulvérisateur 86 ainsi que l'extrémité du bras articulé 84 du robot 8a ou 8b. De plus, le volume V6 délimité par l'enceinte 60 est assez grand pour que le pulvérisateur 86 puisse décrire une trajectoire en trois dimensions dans ce volume. Toutes les surfaces du pulvérisateur 86 peuvent donc être exposées aux jets des buses de solvant 64. Ainsi, la station de nettoyage 2 est capable de nettoyer toutes les surfaces du pulvérisateur 86.

Le volume V6 est compris entre 125 L et 1000 L. A titre comparatif, les boites de rinçage de l'art antérieur ont un volume plutôt de l'ordre de 96 L.

Avantageusement, la hauteur de l'enceinte 60 est telle que le poignet 85 de chacun des robots 8a et 8b peut également pénétrer à l'intérieur de l'enceinte 60 et être nettoyé par les buses de solvant 64 et par le rouleau 66.

De manière astucieuse, le poste de rinçage 6 comprend un moyen pour récupérer le solvant liquide usagé. Dans l'exemple, ce moyen est un collecteur non représenté disposé en partie inférieure du poste de rinçage 6. Le système 2 comprend en outre une pompe non représentée pour réinjecter le solvant liquide usagé à l'intérieur du circuit d'alimentation des buses 64. En effet, l'injection de solvant « sale » est suffisante pour rincer les surfaces du pulvérisateur car le solvant, même avec des traces de peinture, continue d'exercer une action chimique. Toutefois, afin de ne pas laisser de traces de solvant chargé en peinture sur les surfaces du pulvérisateur 86, du solvant propre est utilisé en fin de cycle. Ce procédé permet de réutiliser plusieurs fois les solvants liquides utilisés pour le rinçage, ce qui limite la consommation de solvants.

Le système 2 comprend en outre un poste de séchage 4. Dans l'exemple, le poste de séchage 4 est distinct du poste de rinçage 6. Le poste de séchage 4 permet de sécher le solvant liquide appliqué sur les surfaces du pulvérisateur 86 pour éviter que le solvant goutte sur les surfaces à peindre.

Le poste de séchage 4 ne possède qu'une seule fonction : le séchage. Ainsi, le poste de séchage 4 est dépourvu de buse de rinçage pouvant permettre de rincer les éléments reçus à l'intérieur du poste de séchage 4, par exemple par application d'un solvant liquide.

Avantageusement, le poste de séchage 4 comprend une gaine verticale 40 définissant un conduit de passage d'air à l'intérieur duquel le pulvérisateur 86 et l'extrémité du bras d'un robot parmi les robots 8a et 8b peut être positionné pour y être séché. A cet effet, la gaine 40 délimite une ouverture 42 pour le passage du pulvérisateur 46.

La gaine 40 comprend une partie 40.1 délimitant un volume intérieur de section plus importante que le reste de la gaine 40. Ce volume, qui est accessible au pulvérisateur 86 par l'ouverture 42, est assez grand pour recevoir l'intégralité du pulvérisateur 86, ainsi que le poignet 85 du robot.

La gaine 40 est conçue pour guider un débit d'air important, à basse pression, notamment à une pression inférieure ou égale à 2 bar. En particulier, la gaine 40 a une section minimale supérieure ou égale à 350 mm². Typiquement, le débit d'air circulant dans la gaine 40 est compris entre 1000 m³/h et 2000 m³/h, par exemple de l'ordre de 1500 m³/h. Ainsi, la vitesse de l'air circulant autour du pulvérisateur 86 lors du séchage est comprise entre 10 m/s et 20 m/s dans la section de passage concernée, ce qui assure un séchage efficace. Dans l'exemple, l'air circule à l'intérieur de la gaine 40 de haut en bas.

Astucieusement, la gaine 40 est reliée au système de ventilation de la cabine C utilisé pour récupérer l'overspray. Cela permet de s'affranchir de l'utilisation d'un ventilateur et d'économiser ainsi de l'énergie électrique. Le poste de séchage utilise donc une partie de l'air utilisé pour la ventilation de la cabine.

En variante non représentée, l'air utilisé pour le séchage provient de l'extérieur de la cabine. Un ventilateur ou un extracteur d'air électrique est alors agencé à une extrémité de la gaine 40 pour créer une dépression ou une surpression à l'intérieur de la gaine 40 et former un passage d'air à l'intérieur de celle-ci.

Avantageusement, la section de l'enceinte 60 dans un plan horizontal est plus grande que la section de la gaine 40 dans un plan horizontal. En effet, il n'est pas nécessaire de déplacer le pulvérisateur 42 à l'intérieur de la gaine 40 pour assurer un séchage complet des surfaces du pulvérisateur 86. En d'autres termes, le pulvérisateur 86 reste immobile lors du séchage. La gaine 40 délimite donc un espace minimal pour recevoir le pulvérisateur 86. Ainsi, la section de la gaine 40 est aussi petite que possible, ce qui permet de garder l'air circulant dans la gaine sous pression et d'obtenir par conséquent un séchage efficace. En revanche, l'enceinte est plus grande pour, d'une part, ne pas entraver les mouvements du pulvérisateur 86 lors du rinçage et, d'autre part, éviter que les surfaces du pulvérisateur se salissent par rebonds ou éclaboussures.

Le nettoyage des robots pulvérisateurs 8a et 8b est effectué de manière périodique. Par exemple, le nettoyage des robots pulvérisateurs 8a et 8b peut être effectué toutes les quatre heures lorsque les robots 8a et 8b sont utilisés pour peindre l'extérieur de la carrosserie automobile. En revanche, lorsque les robots pulvérisateurs 8a et 8b sont utilisés pour peindre l'intérieur d'un véhicule, par exemple l'intérieur d'un van, les robots pulvérisateurs se salissent davantage et ont donc besoin d'être nettoyés plus fréquemment. Une fréquence appropriée dans ce cas est de l'ordre de deux heures.

Les séquences de nettoyage du pulvérisateur sont programmées pendant des arrêts de production imposés de l'installation de revêtement. Ces arrêts de production sont aménagés par exemple pendant les pauses du personnel et/ou lors d'un changement d'équipe. Le temps alloué au nettoyage est donc plus long que lors d'un changement de teinte ou lors d'un changement de véhicule. En pratique, une séquence de nettoyage dure, pour un robot, entre 1 min et 4 min, en particulier de l'ordre de 3 min. Pour deux robots, comme dans l'exemple, la séquence de nettoyage dure entre 3 min et 6 min, en particulier de l'ordre de 5 min. Dans tous les cas, chaque séquence de nettoyage a une durée minimale de 1 minute.

Lors d'une séquence de nettoyage, un premier robot parmi les robots 8a et 8b se déplace de manière à insérer son pulvérisateur 86 à l'intérieur de l'ouverture 62 du poste de rinçage 6. Dans l'exemple, il s'agit du robot pulvérisateur 8b. Une fois que le pulvérisateur 86 est complètement engagé à l'intérieur de l'enceinte 60, les buses 64 projettent un solvant liquide en direction du pulvérisateur 86 du robot pulvérisateur 8b et le rouleau 66 est mis en marche.

Avantageusement, le pulvérisateur 86 décrit, à l'intérieur de l'enceinte 60, une trajectoire préétablie en trois dimensions combinant des mouvements de translation et de rotation, de façon à ce que toute la surface du pulvérisateur 86 peut être exposée, au moins temporairement, à un jet de solvant liquide appliqué par l'une des buses 64. Cette trajectoire est répétée lors de chaque séquence de nettoyage.

Ainsi, tous les recoins difficiles à nettoyer, même manuellement par un opérateur, peuvent être atteints par le jet des buses 64. Le cycle de rinçage est réglé de telle sorte que le solvant liquide n'est pas projeté sous pression directement dans des zones sensibles normalement étanches au passage d'un chiffon imbibé de solvant, comme les interstices entre les surfaces du pulvérisateur 86 et les surfaces du robot.

Le cycle de rinçage est mis au point en amont et son efficacité a été testée au préalable. Cela signifie que la trajectoire du pulvérisateur 86 est préétablie, tout comme le paramétrage des buses 64 en pression et en débit. Ce cycle automatique est reproductible et fiable, c'est-à-dire qu'il garantit un résultat constant lors de chaque séquence de nettoyage.

Egalement pendant le cycle de rinçage, la brosse 66 est entraînée en rotation et frotte contre les surfaces du pulvérisateur 86 afin de décrocher les éventuels résidus de peinture qui auraient résisté à l'injection de solvant liquide par les buses 64. Le poste de rinçage combine donc une action chimique exercée par le solvant liquide avec une action mécanique exercée par la brosse 66. Cette action combinée permet d'enlever efficacement tous les résidus de peinture accrochés aux surfaces du pulvérisateur 86.

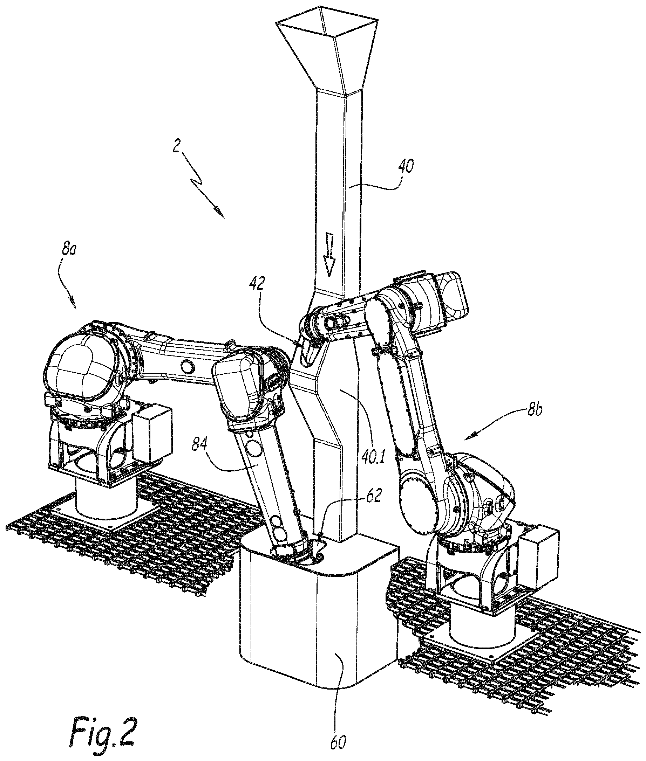

Une fois que le pulvérisateur 86 est propre, c'est-à-dire que les surfaces du pulvérisateur sont dénuées de peinture, le robot pulvérisateur se déplace pour dégager le pulvérisateur 86 à l'extérieur de l'enceinte 60. Le robot pulvérisateur 8b se déplace ensuite en direction du poste de séchage. En parallèle, l'autre robot, c'est-à-dire le robot pulvérisateur 8a, se déplace de manière à amener son pulvérisateur 86 près du poste de rinçage 6 : c'est la configuration de la figure 1. Le pulvérisateur 86 du robot 8a pénètre alors dans l'enceinte 60 pour y être rincé, alors que le pulvérisateur 86 du robot 8b pénètre par l'ouverture 42 à l'intérieur de la gaine 40 dans l'espace délimité à cet effet. Pendant que le pulvérisateur 86 du robot 8a est rincé, le pulvérisateur 86 du robot 8b est séché : c'est la configuration de la figure 2. Avantageusement, le robot 8b reste immobile pendant le séchage.

Une fois que le pulvérisateur 86 du robot 8b est complètement séché, c'est-à-dire qu'il n'y a plus de traces de solvant liquide sur les surfaces du pulvérisateur 86, le pulvérisateur 86 est sorti à l'extérieur de la gaine 40 : le robot pulvérisateur 8b est de nouveau opérationnel. C'est alors au tour du robot pulvérisateur 8a d'être séché. Au terme du séchage du robot pulvérisateur 8a, la séquence de nettoyage est terminée.

Dans l'exemple, chaque séquence de nettoyage comprend une étape de rinçage de tout ou partie de chaque élément à nettoyer et une étape de séchage de tout ou partie de chaque élément à nettoyer. Cependant, chacune de ces étapes est optionnelle. Ainsi, en variante, l'étape de rinçage et l'étape de séchage peuvent être remplacées par une étape de nettoyage « mécanique » durant laquelle les résidus de peintures sont décrochés par un organe de nettoyage mécanique, tel qu'un rouleau automatique ou une brosse motorisée.

Selon une autre variante non représentée applicable au premier mode de réalisation, le poste de rinçage 6 ne comprend pas d'enceinte 60. Cette variante est possible uniquement dans le cas où la cabine est équipée d'un laveur traditionnel capable d'absorber les solvants liquides, car il y a un risque d'éclaboussures.

Selon une autre variante non représentée, l'installation de revêtement comprend un ou plusieurs robots supplémentaires, appelés robots de substitution. Des robots de substitution peuvent être prévus pour chaque robot ou pour certains robots seulement de l'installation. Un robot de substitution permet de remplacer immédiatement un robot qui tomberait en panne. En règle générale, un robot pulvérisateur est dédié au revêtement d'une zone spécifique d'un véhicule, comme le capot, le toit ou encore une portière. Dans l'exemple, chacun des robots est polyvalent et peut être programmé de manière à peindre les zones voisines à celle qui lui est attribuée. Les robots de substitution n'interviennent pas seulement en cas de panne. En effet, en fonctionnement normal, le robot de substitution remplace de manière périodique le robot principal. Cela permet d'éviter qu'un robot reste trop longtemps en attente, ou « stand-by » en Anglais. On s'assure ainsi que le robot sera opérationnel en cas de panne et qu'il n'y aura pas de surprise lorsque le robot de dépannage doit intervenir. Pendant l'intervalle de temps où il est en attente, le robot peut alors être nettoyé et séché, et ceci sans interrompre la ligne de production. Lors d'une permutation, le robot qui était en attente revient alors propre, ce qui est une garantie supplémentaire de qualité.

Selon une autre variante non représentée applicable au premier mode de réalisation, le poste de rinçage 6 peut être conçu pour recevoir une plus grande partie du robot afin de nettoyer, par exemple, une partie au moins du bras articulé 84.

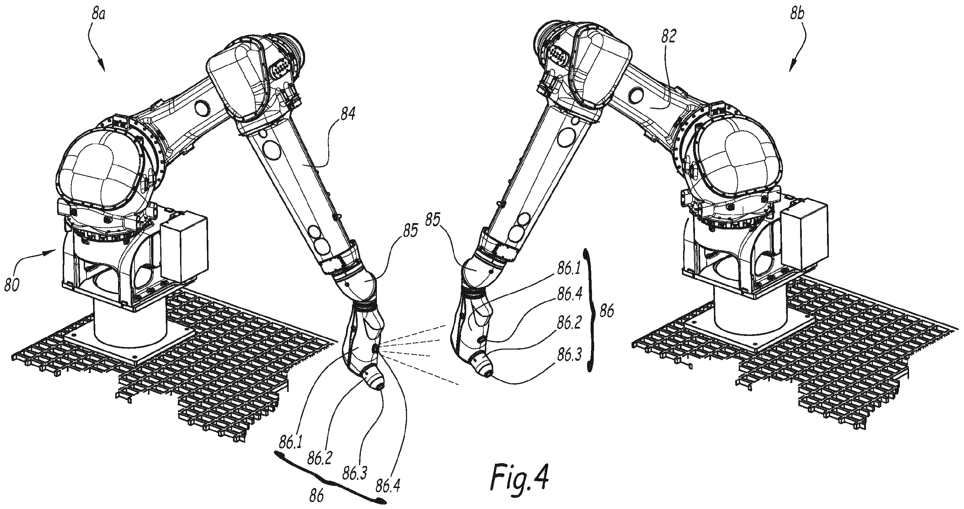

Sur la figure 4 est représentée une station de nettoyage ne faisant pas partie de l'invention. Dans ce qui suit, seules les différences par rapport au premier mode de réalisation sont mentionnées par souci de concision. En outre, les éléments analogues ou identiques à ceux du premier mode de réalisation conservent leurs références numériques, alors que les autres éléments portent d'autres références numériques.

Le système conforme à cette variante est spécifique en ce qu'il comprend deux buses 86.4 de projection d'un solvant liquide, montées respectivement sur deux robots pulvérisateur distincts 8a et 8b, les deux robots 8a et 8b étant alors aptes à se nettoyer mutuellement l'un l'autre. Le pulvérisateur 86 de chaque robot comprend donc deux têtes de pulvérisation, parmi lesquelles une tête est dédiée à la pulvérisation de peinture alors que l'autre tête est dédiée à la pulvérisation de solvant liquide. Les robots 8a et 8b sont alors multitâches : leur tâche principale est la pulvérisation et leur tâche secondaire est le nettoyage. En variante, on peut imaginer que ces mêmes robots 8a et 8b puissent être capables d'effectuer d'autres tâches, comme par exemple ouvrir une porte de véhicule, à la manière d'un robot manipulateur.

Lors d'une séquence de nettoyage, le robot 8a commence par nettoyer le robot 8b en pulvérisant, grâce à sa buse 86.4 un solvant liquide sur les surfaces du pulvérisateur 86 du robot 8b. Une fois que le pulvérisateur 86 du robot 8b est rincé, ce dernier nettoie à son tour le robot 8a, grâce à sa buse 86.4. Les robots 8a et 8b sont ensuite commandés pour déplacer leurs pulvérisateurs respectifs 86 vers un poste de séchage non représenté, identique à celui du premier mode de réalisation, afin de sécher les solvants liquides appliqués sur les surfaces.

Afin de rincer toute la surface du pulvérisateur porté par l'un ou l'autre des robots 8a et 8b, le robot qui nettoie décrit une trajectoire préétablie par rapport au robot qui est nettoyé. Le robot nettoyé reste alors immobile.

Selon une autre variante, lors d'une séquence de nettoyage, le robot nettoyeur reste immobile et c'est le robot nettoyé qui décrit une trajectoire préétablie par rapport à la buse de solvant du robot nettoyeur.

Selon une autre variante, lors d'une séquence de nettoyage, les deux robots décrivent des trajectoires préétablies, la trajectoire du robot nettoyeur étant alors synchronisée, c'est-à-dire coordonnée, avec la trajectoire du robot nettoyé.

Selon une autre variante, lors d'une séquence de nettoyage, les robots 8a et 8b se nettoient mutuellement l'un l'autre en simultané.

Selon une autre variante, les robots 8a et 8b sont aptes à nettoyer les parois de la cabine C. Ils sont en effet capables de projeter du solvant liquide avec leur buse 86.4 sur les parois de la cabine. Dans le cas où la cabine C comprend un laveur sec, les robots 8a et 8b sont équipés d'un dispositif d'aspiration propre à aspirer le solvant liquide projeté sur les parois de la cabine, pour éviter qu'il ne s'écoule vers le laveur sec, lequel ne tolère pas les rejets liquide.

Selon une autre variante, l'un des robots pulvérisateurs 8a et 8b est remplacé par un autre type de robot, tel que par exemple un robot dédié au nettoyage ou un robot manipulateur. Cet autre type de robot pourrait alors nettoyer le robot pulvérisateur voisin. Les robots manipulateurs ont pour fonction principale de déplacer des pièces. Dans l'exemple, un robot manipulateur pourrait par exemple être prévu aux côtés d'un robot pulvérisateur pour ouvrir ou fermer les portières et/ou le coffre et/ou le capot d'une carrosserie automobile. Le robot manipulateur pourrait en outre, à titre secondaire, assurer le nettoyage des équipements de peinture de la cabine, et notamment le nettoyage du robot pulvérisateur. Un robot dédié au nettoyage est un robot dont la tâche principale est le nettoyage des équipements de peinture. Un tel robot pourrait être muni d'une ou plusieurs buses pour la projection d'un solvant liquide sur les surfaces des équipements de peinture à nettoyer. Le robot dédié au nettoyage n'aurait pas besoin d'être lui-même nettoyé, ou du moins pas à la même fréquence que les robots pulvérisateur ou les robots manipulateur. Le robot dédié au nettoyage pourrait en outre nettoyer les parois de la cabine. Egalement, au moins un robot pulvérisateur, un robot manipulateur et un robot dédié au nettoyage pourraient être implantés à l'intérieur de la cabine.

A titre de variante non représentée applicable au premier mode de réalisation ainsi qu'aux autres variantes, le poste de séchage 4 comprend un séparateur air-liquide permettant de récupérer les gouttes de solvant liquide qui sont décollées des surfaces du pulvérisateur 86 sous l'effet du passage de l'air à l'intérieur de la gaine 40. Par exemple, ce séparateur air-liquide peut être un séparateur du type cyclonique disposé en partie inférieure du poste de séchage 4, de manière à récupérer les gouttes de liquide de solvant par gravité. En outre, ce type de séparateur a pour avantage qu'il génère un tourbillon d'air, ou vortex, autour du pulvérisateur 86, ce qui améliore l'efficacité du séchage.

A titre de variante applicable au premier mode de réalisation ainsi qu'aux autres variantes, le pulvérisateur 86 reste immobile lors du rinçage.

Selon une autre variante non représentée, un seul des deux robots 8a et 8b est nettoyé lors d'une séquence de nettoyage. De même, le système 2 peut être implanté à l'intérieur d'une cabine ne comportant qu'un seul robot pulvérisateur.

Selon une autre variante non représentée, les robots pulvérisateurs sont suspendus à une structure verticale. Il n'y a alors pas de caillebotis.

Selon une autre variante non représentée, l'installation de revêtement est équipée pour permettre un changement d'outil de pulvérisation, par exemple un changement de jupe pour un pulvérisateur monté à l'extrémité du bras d'un robot. Le changement d'outil permet d'utiliser un type de pulvérisateur adapté à chaque zone du véhicule à peindre (pulvérisateur à jet rond, à jet plat...). Un sas dédié au changement d'outil pourrait alors être implanté en bord de ligne. Ce sas comprendrait deux ouvertures équipées chacune d'un volet roulant. Une première ouverture serait ouverte sur l'intérieur de la cabine pour donner un accès aux robots. On comprend donc que la cabine comprend dans ce cas un ou plusieurs rails permettant de déplacer de manière commandée les robots à l'intérieur du sas. Une seconde ouverture permettrait à un opérateur de pénétrer dans le sas. Le sas est équipé d"une ventilation séparée qui est mise en service à la demande. Le sas est ventilé par de l'air recyclé en mode production et en air neuf en mode maintenance. Les opérateurs ont ainsi la possibilité d'intervenir sur les robots pour des opérations de maintenance et/ou de nettoyage.

## Revendications

1. Système de nettoyage automatique (2), destiné à être positionné à l'intérieur d'une cabine à atmosphère contrôlée (C) appartenant à une installation de revêtement, le système comprenant :
- au moins une buse (64) d'application d'un solvant liquide sur tout ou partie d'un robot pulvérisateur (8a, 8b), comprenant un bras mobile (84) à l'extrémité duquel est prévu un poignet (85) et un pulvérisateur (86) attaché sur le poignet, chaque buse (64) appartenant à un poste de rinçage (6), dimensionné pour recevoir le pulvérisateur (86) en totalité, le poste de rinçage étant de préférence commun à plusieurs robots pulvérisateurs (8a, 8b), et
- un poste (4) de séchage, dimensionné pour recevoir tout ou partie du robot pulvérisateur (8a, 8b), toute la surface du pulvérisateur (86) pouvant être exposée, au moins temporairement, à un jet de solvant liquide appliqué par la buse (64) ou par l'une des buses (64),
**caractérisé en ce que** le poste de séchage (4) et le poste de rinçage (6) sont distincts.

2. Système selon la revendication 1, **caractérisé en ce que** le poste de rinçage (6) comprend un rouleau (66).

3. Système selon l'une des revendications précédentes, **caractérisé en ce que** le poste de séchage (4) comprend une gaine (40) définissant un conduit de passage d'air à l'intérieur duquel tout ou partie du robot pulvérisateur (8a, 8b) peut être positionné.

4. Système selon la revendication 3, **caractérisé en ce que** la gaine (40) a une section minimale supérieure à 350 mm².

5. Système selon la revendication 3 ou 4, **caractérisé en ce que** le poste de rinçage (6) comprend une enceinte (60), délimitant une ouverture pour le passage du pulvérisateur (86) et **en ce que** la section de l'enceinte est plus grande que la section de la gaine (40).

6. Système selon l'une des revendications précédentes, **caractérisé en ce que** le système comprend un moyen pour récupérer le solvant liquide usagé et une pompe pour réinjecter le solvant liquide usagé à l'intérieur d'un circuit d'alimentation de la buse (64) ou des buses (64).

## Patentansprüche

1. System (2) zur automatischen Reinigung, das vorgesehen ist, in den Innenraum einer Kabine (C) mit kontrollierter Atmosphäre positioniert zu werden, die zu einer Beschichtungsanlage gehört, wobei das System umfasst:
- mindestens eine Düse (64) zum Aufbringen eines flüssiges Lösungsmittels auf die Gesamtheit oder ein Teil eines Zerstäubungsroboters (8a, 8b), der einen beweglichen Arm (84) aufweist, an dessen Ende ein Handgelenk (85) und ein an dem Handgelenk befestigter Zerstäuber (86) vorgesehen ist, wobei jede Düse (64) zu einer Reinigungsstation (6) gehört, die bemessen ist, um den Zerstäuber (86) in seiner Gesamtheit aufzunehmen, wobei die Reinigungsstation vorzugsweise mehreren Zerstäubungsrobotern (8a, 8b) zugeordnet ist, und
- eine Trocknungsstation (4), die bemessen ist, den gesamten oder einen Teil des Zerstäubungsroboters (8a, 8b) aufzunehmen, wobei die gesamte Oberfläche des Zerstäubers (86) zumindest zeitweise einem Strahl eines flüssigen Lösungsmittels, das von der Düse (64) oder von einer Düsen (64) aufgebracht wird, ausgesetzt ist,
**dadurch gekennzeichnet, dass** die Trocknungsstation (4) und die Reinigungsstation (6) voneinander getrennt sind.

2. System nach Anspruch 1, **dadurch gekennzeichnet, dass** die Reinigungsstation (6) eine Walze (66) umfasst.

3. System nach einem der vorhergehenden Ansprüche, **dadurch gekennzeichnet, dass** die Trocknungsstation (4) eine Ummantelung (40) umfasst, die einen Luftströmungskanal begrenzt, in dessen Innerem der gesamte oder ein Teil des Zerstäubungsroboters (8a, 8b) positioniert werden kann.

4. System nach Anspruch 3, **dadurch gekennzeichnet, dass** die Umhüllung (40) einen minimalen Querschnitt größer als 350 mm² aufweist.

5. System nach Anspruch 3 oder 4, **dadurch gekennzeichnet, dass** die Reinigungsstation (6) eine Einfassung (60) umfasst, die eine Öffnung für den Durchgang des Zerstäubers (86) begrenzt, und dass der Querschnitt der Einfassung größer ist als der Querschnitt der Umhüllung (40).

6. System nach einem der vorhergehenden Ansprüche, **dadurch gekennzeichnet, dass** das System ein Mittel zum Sammeln des gebrauchten flüssigen Lösungsmittels und eine Pumpe zum Wiedereinführen des gebrauchten flüssigen Lösungsmittels in das Innere eines Versorgungskreises der Düse (64) oder der Düsen (64) umfasst.

## Claims

1. An automatic cleaning system (2), intended to be positioned inside a booth (C) with a controlled atmosphere belonging to a coating facility the system comprising:
- at least one nozzle (64) for applying a liquid solvent on all or part of the spraying robot (8a, 8b), comprising a moving arm (84) at the end of which a handle (85) and a sprayer (86) attached on the handle are provided, each nozzle (64) belonging to a rinsing station (6), dimensioned to receive the sprayer (86) completely, the rinsing station preferably being shared by several spraying robots (8a, 8b), and
- a drying station (4), dimensioned to receive all or part of a spraying robot (8a, 8b), the entire surface of the sprayer (86) could be exposed, at least temporarily, to a liquid solvent jet applied by the nozzle (64; 86.4) or by one of the nozzles (64),
**characterized in that** the drying station (4) and the rinsing station (6) are separate.

2. The system according to claim 1, **characterized in that** the rinsing station (6) comprises a roller (66).

3. The drying station according to one of the preceding claims, **characterized in that** the drying station (4) comprises a sheath (40) defining an air passage duct inside which all or part of the spraying robot (8a, 8b) can be positioned.

4. The drying station according to claim 3, **characterized in that** the sheath (40) has a minimum section larger than 350 mm².

5. The system according to claim 3 or 4, **characterized in that** the rinsing station (6) comprises an enclosure (60), defining an opening for the passage of the sprayer (86), and **in that** the section of the enclosure is larger than the section of the sheath (40).

6. The system according to one of the preceding claims, **characterized in that** the system comprises a means for recovering the used liquid solvent and a pump for reinjecting the used liquid solvent inside a supply circuit of the nozzle(s) (64).
